# EUROPEAN PATENT APPLICATION

(11) **EP 0 933 113 A1**
(43) Date of publication of application: **04.08.1999**
(21) Application number: 98310112.2
(22) Date of filing: 10.12.1998
(51) Int. Cl.: B01D 29/01, B01D 36/00, B04C 9/00

(54) **Separation apparatus**

(30) Priority: 16.12.1997 GB 9726514
(71) Applicant: Cloverleaf Industries Limited, Brentwood, Essex CM15 Old (GB)
(72) Inventor: Roberts, John, Stondon Massey, Essex (GB); Roberts, Michael, Canvey Island, Essex (GB); Forsyth, Richard, Latchindon, Chelmsford, Essex (GB); Sturman, Ron, Hornchurch, Essex (GB)
(74) Representative: Evens, Paul Jonathan

(57) **Abstract**

Apparatus (10) for separating entrained solids from a fluid flow (e.g., pond water), comprises an inner chamber (12) and an outer chamber (14) thus enabling two different separation operations to be performed. Specifically, the outer chamber (14) is used for cyclonic separation, with fluid flowing into the chamber from inlet (16) being swirled into a vortex to effect separation of relatively coarse solid particles from the fluid flow. Once subjected to cyclonic separation, fluid overflows weirs (18) into the inner chamber (12) for removal of relatively fine particles and other contaminants by filtration using resilient foam (40), before flowing through outlet (22).

## Description

The present invention relates to apparatus for separating entrained solids from a fluid flow, and particularly, but not exclusively, to filtration apparatus for removing unwanted solid material from pond water.

Pond filters are an almost essential part of any system designed to maintain pond hygiene, particularly with fishponds. Typically, pond filters work in two ways in order to clean the water thoroughly. On a purely mechanical level, they remove solid material including fish waste and algae, helping to create clear water. Secondly, on a biological level, they host "friendly" bacteria, particularly on the surfaces of the filter media, which remove harmful pollutants.

It is known to provide a two-stage system for enhanced cleaning of pond water, in which the water first passes through a separate tank where it is subjected to swirl (vortex) sedimentation before entering the pond filter. The cyclonic action in the vortex tank causes coarse and heavy solids to settle so that they are not carried onto the conventional pond filter. As a consequence, the pond filter is less likely to become blinded with solid than would otherwise be the case. The low maintenance advantage of the two-stage system is somewhat offset by the cost penalty associated with buying additional equipment.

According to the present invention, there is provided apparatus for separating entrained solids from a fluid flow, comprising a housing having a fluid inlet and a fluid outlet, with fluid flowing from the inlet to the outlet being swirled into a vortex to effect separation of entrained solid, characterised in that the housing comprises an inner chamber and an outer chamber, with one of the chambers communicating with the inlet and the other with the outlet, and with one of the chambers, in use, containing the vortex.

The apparatus enables two different separation operations to be performed in a single housing. Thus, with one chamber for cyclonic separation, the other may be for further separation, possibly including filtration means such as brushes, porous materials e.g. foam or rock. With such a two-stage arrangement, it is possible to achieve coarse and fine levels of solid separation in one housing, without risking the coarse solids blinding fine-level filtration means. In the case of pond accessories, the location of one chamber within the other in a single housing obviates the need for a stand-alone vortex tank, resulting in considerable space savings.

In one embodiment, the one chamber communicating with the inlet has a substantially circular cross-section. A circular section facilitates swirling of the fluid to create the vortex. Preferably, the inlet directs fluid substantially tangentially to the curved periphery of the chamber communicating with it. Fluid entering the housing, either under gravity feed or the action of a pump, may have a significant velocity. By directing the fluid flow tangentially to the curved periphery, a cyclonic action may be generated automatically simply by harnessing the momentum of the flowing fluid.

The inner periphery of the one chamber communicating with the inlet may taper towards a surface where separated solids will collect. The inner periphery may have a substantially conical, frusto-conical or paraboloid shape. Preferably, the inlet is located nearer the separated-solids collection surface than the widest part of the tapered chamber.

The apparatus may further comprise a weir disposed between the inner and outer chambers in order to control the flow of fluid therebetween. The level of the weir may be above the level of fluid in the inlet and may be above the level of fluid in the outlet. If the weir is at a higher level than the inlet and outlet, fluid must overflow from one chamber to the next in order to pass through the housing. The weir may make the passage of fluid through the housing more tortuous, which may increase sedimentation of entrained solid simply by slowing fluid flow.

In an preferred embodiment, the outer chamber communicates with the inlet, and the inner chamber communicates with the outlet.

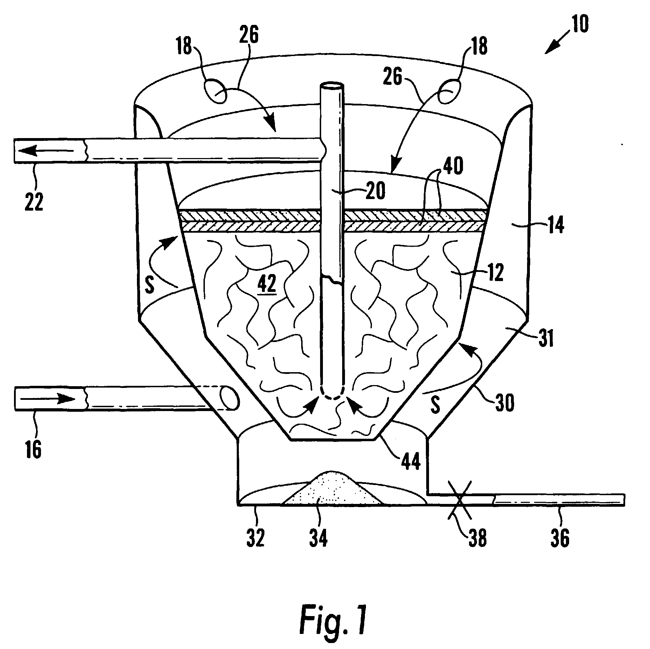

An embodiment of the invention will now be described by way of example with reference to Figure 1.

Figure 1 shows a schematic sectional view through a pond water treatment housing (10), which comprises inner chamber (12) and outer chamber (14). The inner and outer chambers are coaxial, with the inner chamber (12) surrounded around its radial periphery by the outer chamber (14). The outer chamber (14) receives pond water through inlet (16), either by gravity feed or through the positive action of a pump (not shown). The level of pond water received in outer chamber (14) rises until it overflows weirs (18) into the inner chamber (12). Pond water in the bottom of inner chamber (12) is drawn up through a tube (20) before leaving the housing through outlet (22). The course taken by the pond water through the housing (10) defines a tortuous fluid passageway, indicated in part by arrows (26).

The lower part (30) of outer chamber (14) has a frusto-conical shape, and with the outer periphery of inner chamber (12) forms a section (31) of the fluid passageway (26). The inlet (16) directs fluid entering the section (31) substantially tangentially to its curved periphery. The curved periphery re-directs the fluid flow into a spiral path, as indicated by arrows "S". The spiralling motion of the water generates a vortex which is used to remove coarse solids entrained in the fluid. The coarse solids tend to gravitate down at the steep-sided section (30) towards apical discharge tray (32), whilst the water rises towards the weirs (18) . Solids (34) which have accumulated in tray (32) may be removed periodically through discharge pipe (36) by opening valve (38).

Pond water largely free of the coarse solids which were entrained in it at inlet (16), flows over the weirs (18) into the inner chamber (12). The level of water in the inner chamber (12) is set by the level of outlet (22) which is below the level of the weirs (18). Once in the chamber (12) the water passes through screens (40) of resilient foam material to effect mechanical filtration. The filtered water then passes through a bed (42) of rock or the like, e.g. slag, which supports friendly bacteria to effect biological removal of pollutants in the water. Treated water collecting in the well (44) is drawn up through a tube (20) and returned to the pond through outlet (22).

## Claims

1. Apparatus for separating entrained solids from a fluid flow, comprising a housing (10) having a fluid inlet (16), a fluid outlet (22) and a fluid passageway (26) therebetween, the fluid passageway (26) including a section (31) in which fluid flowing from the inlet (16) to the outlet (22) is swirled into a vortex to effect separation of entrained solids, characterised in that the housing comprises an inner chamber (12) and an outer chamber (14), with one of the chambers communicating with the inlet (16) and the other with the outlet (22), and with said section of the fluid passageway being contained in one of the chambers.

2. Apparatus according to claim 1, in which one of the chambers contains a medium (40, 42) for filtering fluid passing through it.

3. Apparatus according to claim 2, in which the filtering medium comprises a resilient foam material (40).

4. Apparatus according to any one of the preceding claims, in which at least one chamber (12, 14) tapers towards a surface (32) where separated solids will collect when no longer entrained in the fluid.

5. Apparatus according to any of the preceding claims, in which the one chamber (14) communicating with the inlet (16) has a curved periphery.

6. Apparatus according to claim 5, in which the curved periphery is of substantially circular or annular cross-section.

7. Apparatus according to claims 5, 6 or 7, in which the inlet (16) directs fluid substantially tangentially to the curved periphery of the chamber (14) communicating with it.

8. Apparatus according to claim 5 or 6, in which the outer wall of the chamber (14) communicating with the inlet (16) has an inner periphery which is substantially conical, frusto-conical, or paraboloidal.

9. Apparatus according to any one of the preceding claims, further comprising a weir (18), disposed between the inner (12) and outer (14) chambers.

10. Apparatus according to claim 9, in which the weir (12) is above the inlet (16) such that fluid level in the chamber (14) communicating with the inlet (16) is higher than the level of fluid in the inlet (16).

11. Apparatus according to claim 9 or 10, in which the weir (18) is above the outlet (22) such that the level of fluid in the chamber (14) communicating with the inlet is higher than the level of fluid in the outlet.

12. Apparatus according to any one of the preceding claims, in which the outer chamber (14) communicates with the inlet to receive fluid direct therefrom and the inner chamber (12) communicates with the outlet.

13. Water treatment means comprising apparatus according to any one of claims 1 to 12.

14. Apparatus for separating entrained solids from a fluid flow, comprising:
a first chamber (14) having an inlet (16);
a second chamber (12) having an outlet (22); and
a fluid passageway (25) communicating between the inlet and the outlet,
a section (31) of the fluid passageway, disposed in one of the chamber, being adapted to swirl fluid flowing from the inlet to the outlet into a vortex to effect separation of entrained solids, wherein one of the first and second chambers surrounds the other.
